# EUROPEAN PATENT APPLICATION

(11) **EP 3 321 112 A1**
(43) Date of publication of application: **16.05.2018**
(21) Application number: 17178531.4
(22) Date of filing: 28.06.2017
(51) Int. Cl.: B60F 5/02

(54) **MODULAR PASSENGER TRANSPORTATION SYSTEM**

(30) Priority: 10.11.2016 IT 201600113502
(71) Applicant: ITALDESIGN-GIUGIARO S.p.A, 10121 Torino (IT)
(72) Inventor: MARTINOTTI, Massimo, 10024 MONCALIERI (IT); PERINI, Filippo, 10024 MONCALIERI (Torino) (IT); GUELFO, Nicola, 10024 MONCALIERI (IT); ASTALOCH, Jörg, 10024 MONCALIERI (Torino) (IT); BUSSETTI, Nicolas, 10028 TROFARELLO (Torino) (IT)
(74) Representative: Rondano, Davide

(57) **Abstract**

The passenger transportation system comprises: a non-propelled non-wheeled passenger module (10) having at least one passenger seat (18), a first propulsion module (12) configured to autonomously travel on the ground and a second propulsion module (12) configured to autonomously travel in air, wherein the passenger module (10) is arranged to be releasably coupled to the first propulsion module (12) or the second propulsion module (12) to allow the passenger module (10) to be transported on the ground or in air by the first propulsion module (12) or the second propulsion module (12).

## Description

The present invention relates to a passenger transportation system allowing passengers to travel in or on different media, in particular on the ground and in air.

It is an object of the present invention to provide a passenger transportation system of the above-mentioned type that can be easily reconfigured depending on the medium the passenger is going to travel in (or on).

This and other objects are fully achieved according to the present invention by virtue of a passenger transportation system as defined in independent claim 1.

Advantageous embodiments of the invention form the subject-matter of the dependent claims, the content of which is to be intended as constituting an integral part of the following description.

In short, the invention is based on the idea of providing a passenger transportation system that basically comprises a non-propelled non-wheeled passenger module having at least one passenger seat, as well as a first propulsion module configured to travel in or on a medium, wherein the passenger module and the first propulsion module are arranged to be releasably coupled to each other to allow the passenger module to be transported by the first propulsion module.

Advantageously, the first propulsion module is configured to travel on the ground and the passenger transportation system further includes a second propulsion module that is configured to travel in air and is arranged to be releasably coupled to the passenger module to transport this latter in air.

A passenger transportation system according to the invention has therefore a modular structure that allows it to be easily reconfigured depending on the medium the passenger is going to travel in (or on). In order for the passenger to travel on the ground it is only sufficient that the passenger module is coupled to the first propulsion module (ground propulsion module). If the passenger has then to travel in air, the passenger module simply needs to be detached from the first propulsion module and coupled to the second propulsion module (air propulsion module). Such a passenger transportation system provides a valuable solution to the majority of people daily mobility as it allows to move from short to long distances using the most efficient combination of propulsion modules taking into account the boundary conditions (such as, for example, destination and the distance, time, weather, traffic jam and availability of other transportation infrastructures).

Preferably, the first and second propulsion modules are designed as autonomous driving modules able to transport the passenger module to a desired final destination inputted by the passenger. The passenger transportation system according to the invention does not therefore require any active driving capability from the passenger.

According to an embodiment of the invention, the first and second propulsion modules are electrically propelled, i.e. each propulsion module is provided with a propulsion unit including at least one electric motor.

The passenger module may also be provided with additional coupling means for allowing it to be releasably coupled to other transportation infrastructures (i.e. underground, train, railway carriage, elevators, etc.).

Preferably, the passenger transportation system further includes an A.I. (Artificial Intelligence) management platform that is configured to choose the best route to reach the final destination inputted by the passenger through a user interface (such as for example a software application loaded on a mobile phone), depending for example on the passenger's preferences. The management platform may also decide which propulsion units to use in order to reach the desired the final destination. The management platform may for example decide to use either the first propulsion module (ground propulsion module) or the second propulsion module (air propulsion module) through the entire route or, alternatively, to use the first propulsion module for a first length of the route and the second propulsion module for the remaining length of the route or vice versa. The management platform may also combine the usage of the passenger transportation system of the invention with other transportation infrastructures (such as, for example, underground, train, railway carriage, elevators, etc.), in case the passenger module and these transportation infrastructures are provided with suitable coupling means or allowing the passenger module to be releasably coupled to any of these transportation infrastructures. The management platform is an expert system that manages the complete travel considering the unexpected events which might happen during travelling (i.e. change of travel schedules, change of destination, traffic congestion, atmospheric events, etc.). The management platform is actively analysing all the travel data in order to promptly react to any change by modifying the module combination and eventually the connection to the other transportation infrastructures. The passenger, therefore, does not have to care about how to reach the desired final destination but just to input the desired final destination to the user interface.

Further features and advantages of the present invention will become apparent from the following detailed description, given purely by way of non-limiting example with reference to the appended drawings, where:
Figure 1 shows a passenger module, a ground propulsion module and an air propulsion module forming part of a passenger transportation system according to the present invention;
Figure 2 shows a first configuration of the passenger transportation system of the invention suitable for travelling on the ground; and
Figure 3 shows a second configuration of the passenger transportation system of the invention suitable for travelling in air.

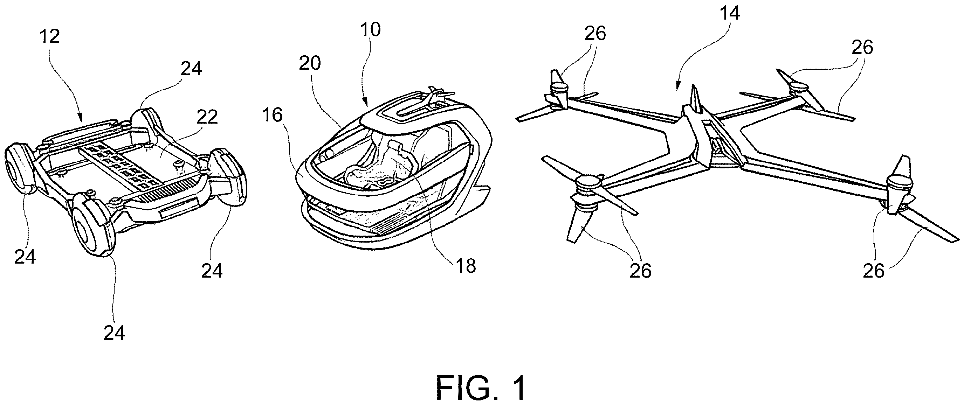

With reference first to Figure 1, a passenger transportation system according to the invention basically comprises a passenger module 10 adapted to transport at least one passenger, a first propulsion module 12 configured to travel on the ground (the first propulsion module 12 being thus hereinafter referred to as "ground propulsion module") and a second propulsion module 14 configured to travel in air (the second propulsion module 14 being thus hereinafter referred to as "air propulsion module"), wherein the passenger module 10 is arranged to be releasably coupled to the ground propulsion module 12 or to the air propulsion module 14 to form a passenger transportation apparatus that is able to travel on the ground or in air, respectively.

The passenger module 10 is a non-wheeled non-propelled transport module comprising a body or frame 16 and at least one passenger seat 18 arranged inside the body 16. The passenger module 10 is thus able to accommodate at least one passenger, along with luggage or other belongings thereof. Advantageously, a windscreen 20 and/or other windows are mounted on the body 16 for allowing the passenger(s) sitting on the seat 18 to see outside of the module 10.

Since the passenger module 10 is a non-propelled module, i.e. it is not provided with propulsion means, it is able to move only if coupled to one of the ground and air propulsion modules 12 and 14 or if carried on board of or coupled to compatible transportation infrastructures (such as, for example, underground, train, railway carriage, elevators, etc.).

The passenger module 10 is provided with coupling means (not shown) designed to allow this module to be releasably coupled to the ground propulsion module 12 or the air propulsion module 14 or other transportation infrastructures (provided that these latter are equipped with suitable coupling means arranged to cooperate with the coupling means of the passenger module). The coupling means may be of any suitable type, for example mechanical, magnetic, etc.

The passenger module 10 is provided with a human machine interface (not shown) for allowing the passenger, among other things, to be continuously updated on the status and the evolving of his travel. The passenger module 10 is also provided with passive and active safety devices (not shown) arranged to ensure the safety of the passenger(s) on board of the module. The user interface, as well as the active and passive safety devices, may be of any suitable type.

The passenger module 10 is also provided with power supply means, such as for example a battery, so as to be electrically autonomous and thus able to power devices and instrumentation on board of the module, such as for example the above-mentioned user interface and safety devices, as well as lights, multipurpose displays, media connection devices, etc.

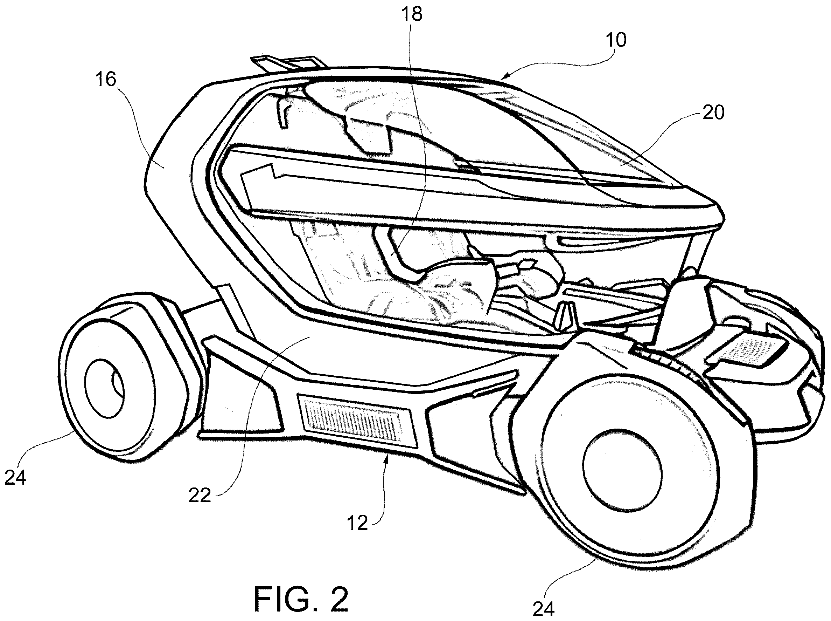

With reference now in particular to Figure 2, the ground propulsion module 12 is an autonomous driving module and is therefore able to autonomously travel on the ground to transport the passenger module 10 when coupled to this latter. To this end, the ground propulsion module 12 is provided with a suitable propulsion unit (not shown), which is preferably configured as an electric propulsion unit (i.e. as a propulsion unit including at least one electric motor), with steering means (not shown), as well as with autonomous driving means (also not shown) configured to control the propulsion unit and the steering means to allow the ground propulsion module to autonomously travel along a given path. In order to power the electric motor, the ground propulsion module 12 comprises power supply means including a battery and/or fuel cell.

Moreover, the ground propulsion module 12 is provided with coupling means (not shown) configured to cooperate with the coupling means of the passenger module 10 to allow releasable connection of the two modules 10 and 12 with each other. In this regard, Figure 2 shows a ground operating condition of the passenger transportation system of the invention, in which the passenger module 10 is carried by, and coupled to, the ground propulsion module 12 to be driven by this latter on the ground.

The ground propulsion module 12 is also able to communicate with the passenger module 10 through the management platform.

According to the embodiment shown in the drawings, the ground propulsion module 12 comprises a wheeled platform 22 arranged to carry the passenger module 10 on it. The platform 22 may be provided with tyred wheels 24, as shown in figures 1 and 2, or alternatively with caterpillar tracks or other suitable means.

Preferably, the ground propulsion module 12 is provided with active and passive safety devices, which may be of any suitable type and are arranged to interact with the active and passive safety devices of the passenger module 10 to ensure the safety of the passenger(s) on board of the passenger module 10.

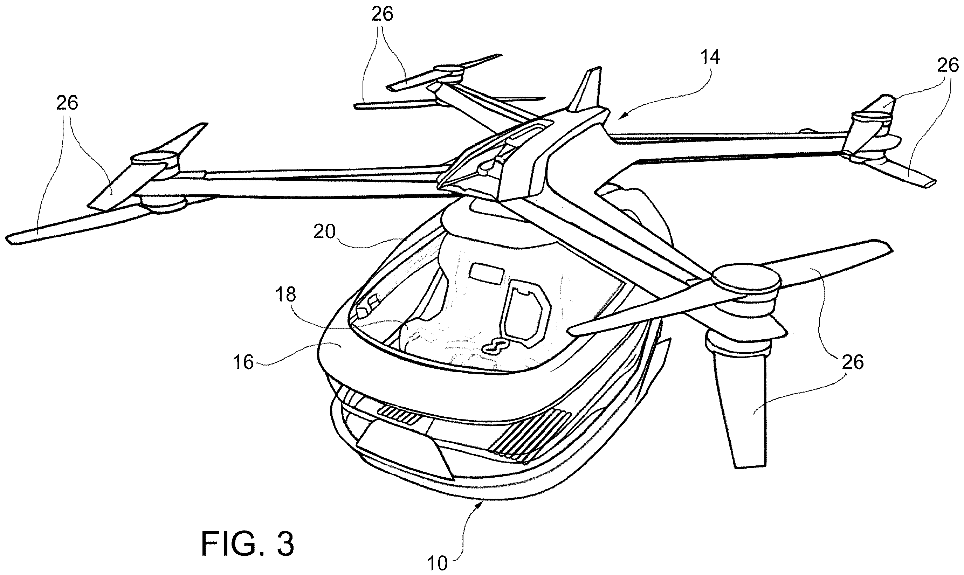

Finally, with reference to Figures 1 and 3, the air propulsion module 14 is an autonomous flying module and is therefore able to autonomously travel in air to transport the passenger module 10 when coupled to this latter. To this end, according to the illustrated embodiment the air propulsion module 14 is provided with a plurality of rotors 26 (preferably at least four rotors) driven by an electric propulsion unit (not shown). The rotors 26 may be fixed or tiltable rotors, free or ducted rotors. In order to power the electric motor(s) of the propulsion unit, the air propulsion module 14 comprises power supply means including a battery and/or fuel cell. The air propulsion module 14 further comprises, in per-se-known manner, suitable avionics, autopilot system, etc. to be able to fly autonomously along a desired route.

Moreover, the air propulsion module 14 is also provided with coupling means (not shown) configured to cooperate with the coupling means of the passenger module 10 to allow releasable connection of the two modules 10 and 14 with each other. In this regard, Figure 3 shows an air operating condition of the passenger transportation system of the invention, in which the passenger module 10 is carried by, and coupled to, the air propulsion module 14 to be driven by this latter in air.

The air propulsion module 14 is also able to communicate with the passenger module 10 through the management platform.

Preferably, the air propulsion module 14 is also provided, like the ground propulsion module 12, with active and passive safety devices, which may be of any suitable type and are arranged to interact with the active and passive safety devices of the passenger module 10 to ensure the safety of the passenger(s) on board of the passenger module 10.

As is clear from the above description, a passenger transportation system according to the invention is easily reconfigurable from a ground transportation system to an air transportation system, and vice versa, as it only requires to disconnect the passenger module from the current propulsion module and connect it to a different propulsion module or to a compatible transportation infrastructure. The system is totally self-driving and therefore does not require the passenger to be able to drive or fly. The passenger has only to input the desired final destination into the user interface and the system will transport him to the selected destination using the ground and/or air propulsion modules and/or the compatible transportation infrastructures. The transportation system will continuously share with the passenger via the human machine interface system on board of the passenger module the travel information, including possible route changes due to extraordinary events. The passenger transportation system of the invention is also an environmentally friendly transportation system, as it uses purely electric propulsion modules to transport the passenger module.

Naturally, the principle of the invention remaining unchanged, the embodiments and the constructional details may vary widely from those described and illustrated purely by way of non-limiting example, without thereby departing from the scope of the invention as defined in the appended claims.

## Claims

1. Passenger transportation system comprising:
- a non-propelled non-wheeled passenger module (10) having at least one passenger seat (18), and
- a first propulsion module (12) configured to travel in or on a medium,
wherein the passenger module (10) and the first propulsion module (12) are arranged to be releasably coupled to each other to allow the passenger module (10) to be transported by the first propulsion module (12).

2. Passenger transportation system according to claim 1, wherein the first propulsion module (12) is configured to travel on the ground and wherein the passenger transportation system further includes a second propulsion module (14) that is configured to travel in air and is arranged to be releasably coupled to the passenger module (10) to transport this latter in air.

3. Passenger transportation system according to claim 2, wherein the first propulsion module (12) comprises a wheeled platform (22) arranged to carry the passenger module (10) on it.

4. Passenger transportation system according to claim 2 or claim 3, wherein the passenger module (10) is provided with first coupling means for releasable coupling of the passenger module (10) to the first propulsion module (12) and with second coupling means for releasable coupling of the passenger module (10) to the second propulsion module (12).

5. Passenger transportation system according to any of the preceding claims, wherein the passenger module (10) is provided with coupling means for releasable coupling of the passenger module (10) to other compatible infrastructures.

6. Passenger transportation system according to any of the preceding claims, wherein the first and/or second propulsion modules (12, 14) are designed as autonomous driving modules able to transport the passenger module (10) to a desired final destination inputted by the passenger.

7. Passenger transportation system according to any of the preceding claims, wherein the first and/or second propulsion modules (12, 14) are electrically propelled.

8. Passenger transportation system according to any of the preceding claims, further comprising an artificial intelligence management platform arranged to manage the travel data and to communicate with the first and/or second propulsion modules (12, 14) to allow transportation of the passenger module (10) by means of the first and/or second propulsion modules (12, 14) to a desired final destination inputted by the passenger through a user interface.

9. Passenger transportation system according to claim 8, wherein the passenger module (10) includes a human machine interface for allowing the passenger to be informed on the travel, said human machine interface being able to communicate with the management platform interface to be always updated on the travel data.
